(19) Europäisches Patentamt / European Patent Office / Office européen des brevets

(11) **EP 1 995 430 A2**

(12) **DEMANDE DE BREVET EUROPEEN**

(43) Date de publication:
**26.11.2008 Bulletin 2008/48**

(51) Int Cl.:
*F02B 41/08* [(2006.01)]     *F02B 41/06* [(2006.01)]
*F01L 1/047* [(2006.01)]

(21) Numéro de dépôt: **08447026.9**

(22) Date de dépôt: **21.05.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **24.05.2007 BE 200700255**

(71) Demandeur: **Schmitz, Gerhard**
**4780 Saint-Vith (BE)**

(72) Inventeur: **Schmitz, Gerhard**
**4780 Saint-Vith (BE)**

(74) Mandataire: **Cauchie, Daniel**
**Office Parette (Fred Maes)**
**Avenue Gabrielle Petit 2**
**B-7940 Brugelette (BE)**

(54) **Procédé pour améliorer un moteur à combustion interne**

(57)     L'invention se rapporte à un procédé pour améliorer un moteur à combustion interne utilisant :
a) d'une part au moins un cylindre (1) fonctionnant en cylindre basse pression suivant un mode du type deux temps, et
b) d'autre part, deux cylindres (2,3) fonctionnant en cylindres comburants haute pression suivant un mode du type quatre temps, la cylindrée de chacun des cylindres (2,3) étant inférieure à celle du cylindre basse pression (1), les cylindres comburants (2,3) refoulant alternativement leurs gaz comburés vers le cylindre basse pression (1) en vue d'une deuxième détente des gaz comburés.

**Figure 1:** Evolution thermodynamique de la détente globale dans un moteur à combustion interne à cinq temps (état de la technique)

EP 1 995 430 A2

## Description

La présente invention se rapporte, d'une manière générale, à un procédé pour améliorer un moteur à combustion interne.

Plus précisément, l'invention concerne un procédé pour améliorer un moteur à combustion interne du genre comprenant au moins un cylindre qui comprend une chambre de travail de volume variable par le déplacement dans ce cylindre d'un piston entre une position de point mort haut et une position de point mort bas, à chaque tel cylindre étant associés des moyens d'admission et d'évacuation d'un fluide gazeux, le piston de chaque tel cylindre étant relié à un arbre vilebrequin dudit moteur, ce moteur utilisant:

a) d'une part, au moins un tel cylindre fonctionnant en cylindre basse pression suivant un mode du type deux temps, qui comprennent l'admission accompagnée de la détente produisant un travail utile au cours de chaque course du piston de ce cylindre basse pression vers son point mort bas et l'échappement d'un fluide gazeux au cours de chaque course du piston vers son point mort haut, et,

b) d'autre part, deux tels cylindres fonctionnant en cylindres comburants haute pression suivant un mode du type quatre temps, qui comprennent l'admission de l'air ou d'un mélange air-combustible au cours de la première course du piston de chacun desdits cylindres comburants vers son point mort bas, la compression de l'air ou d'un mélange air-combustible au cours de la première course du piston vers son point mort haut, suivie de la combustion, la détente des gaz comburés au cours de la deuxième course du piston vers son point mort bas produisant un travail utile et le refoulement des gaz comburés au cours de la deuxième course du piston vers son point mort haut, la cylindrée de chacun des cylindres comburants étant inférieure à celle du cylindre basse pression, ces cylindres comburants, également dénommés cylindres haute pression, refoulant alternativement leurs gaz comburés vers le cylindre basse pression en vue d'une deuxième détente des gaz comburés.

Le moteur à combustion interne à cinq temps, décrit dans le brevet européen N° 1201892 (Gerhard Schmitz) ou le brevet des Etats-Unis d'Amérique N° 6553977 (Gerhard Schmitz) est fondamentalement un moteur à trois cylindres rangés en lignes. Les deux cylindres aux extrémités du vilebrequin, appelés cylindres haute pression (cylindres HP), ont des cylindrées égales et nettement plus petites que celle du cylindre central, appelé lui cylindre basse pression (cylindre BP). Les deux pistons des cylindres HP se déplacent en parfaite phase entre eux et en opposition de phase par rapport au piston du cylindre BP. Les deux cylindres HP sont alimentés, de préférence par un mélange air/combustible pré comprimé au cours de la première course descendante du piston du cylindre HP. En remontant la première fois, le piston du cylindre HP comprime le mélange air/combustible admis, ce mélange étant brûlé lorsque le piston du cylindre HP est proche de son point mort haut (PMH), ce qui fait augmenter fortement la pression à l'intérieur du cylindre HP. Ce gaz comburé est détendu une première fois pendant la deuxième course descendante du piston du cylindre HP. Quand le piston du cylindre HP atteint son point mort bas (PMB), le piston du cylindre BP, quant à lui, s'approche de son PMH: à ce moment, une communication entre le cylindre HP et le cylindre BP est établie. Pendant la deuxième course du piston du cylindre HP vers son PMH, le piston du cylindre BP descendant vers son PMB, le gaz comburé est transvasé du cylindre HP vers le cylindre BP et, la cylindrée du cylindre BP étant nettement plus grande que celle du cylindre HP, le gaz comburé est détendu une deuxième fois. Quand le piston du cylindre HP atteint son PMH et le piston du cylindre BP son PMB, la communication entre les cylindres HP et BP va être interrompue pendant que la soupape d'échappement du cylindre BP va commencer à s'ouvrir et le rester pendant la course ascendante du piston du cylindre BP afin de permettre finalement l'échappement des gaz comburés du moteur. Pendant le même temps, le piston du cylindre HP redescend et commence un nouveau cycle en aspirant un nouveau mélange air/combustible. L'autre cylindre HP, quant à lui, réalise le même cycle que le premier cylindre HP, mais avec un retard équivalent à un angle de 360° au niveau du vilebrequin par rapport au premier, de manière que le second cylindre HP puisse transvaser ses gaz comburés vers le même cylindre BP pendant que le piston de ce dernier descend la deuxième fois, et ainsi de suite.

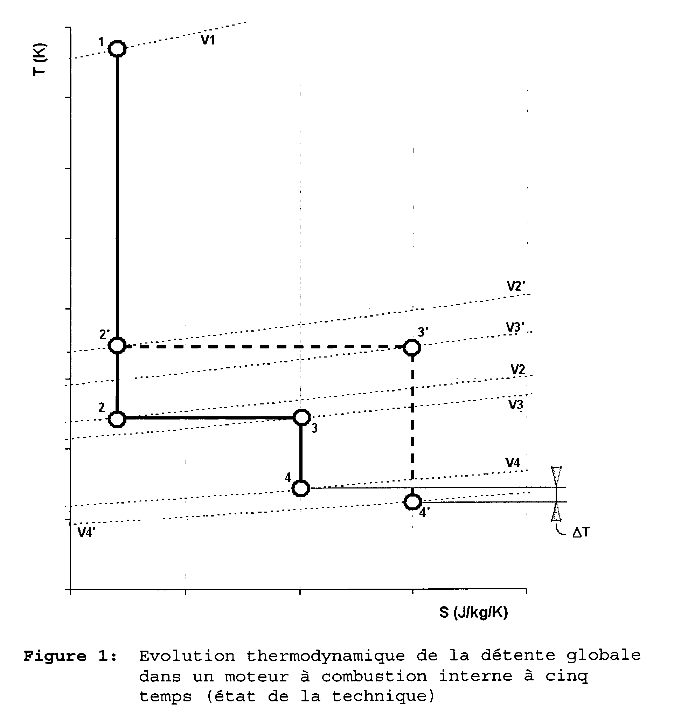

La détente globale dans le moteur à combustion interne à cinq temps se fait, par conséquent, en trois étapes tel qu'illustré à la Figure 1, en annexe, qui constitue une représentation graphique de l'évolution thermodynamique de cette détente globale:

**1. Détente dans le cylindre HP** ou évolution de 1 ou "état 1" vers 2 ou "état 2", càd. la détente qui intervient dans le cylindre haute pression quand le piston se déplace de son PMH (état 1) jusqu'à la position qu'il occupera lorsque s'établira la communication entre le cylindre HP et le cylindre BP adjacent (état 2). Cette détente se réalisera idéalement d'une manière isentropique.

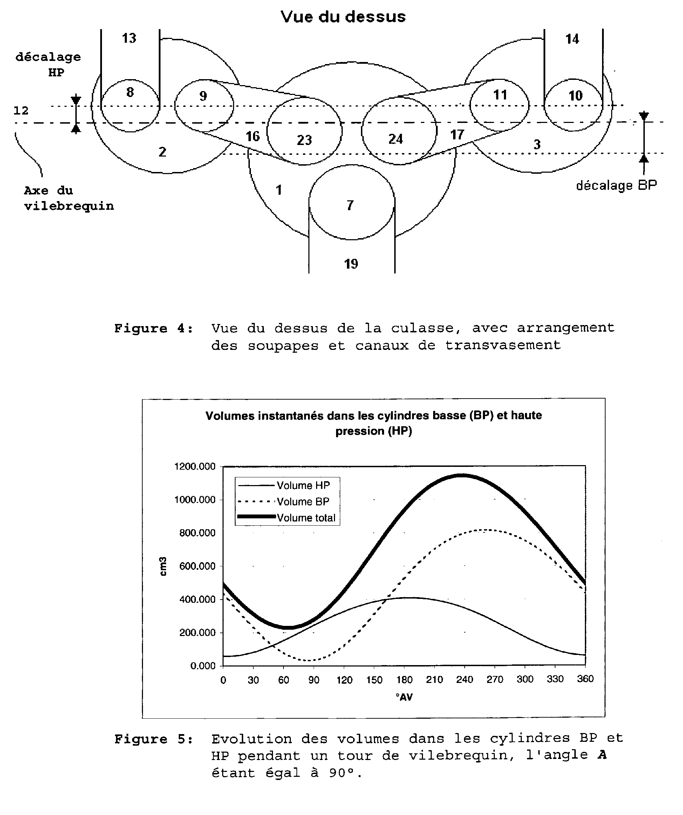

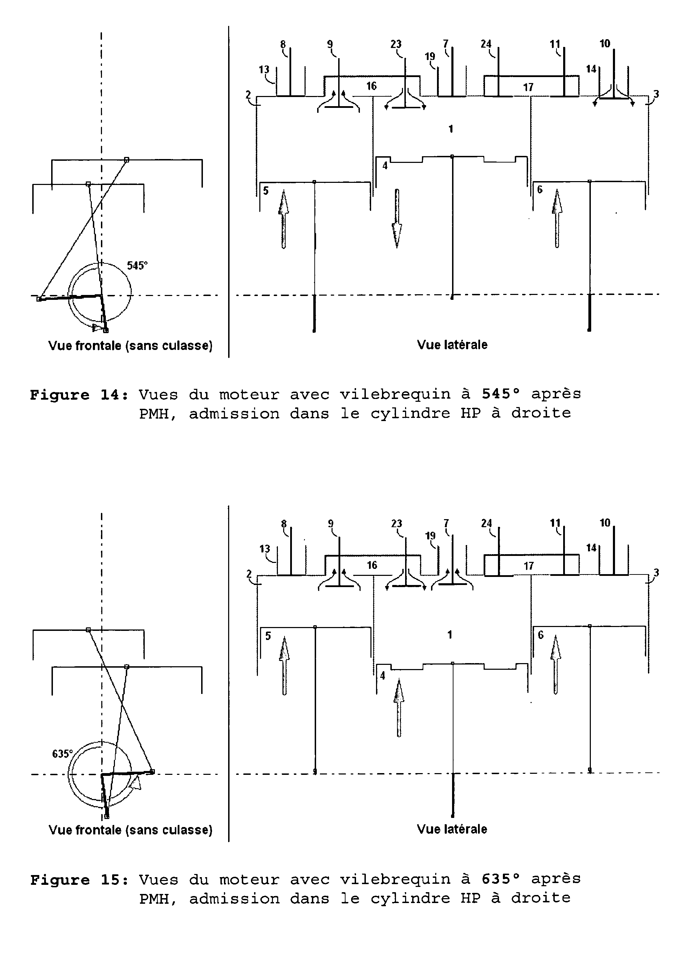

**2. Mise sous pression dans le cylindre BP** ou évolution de l'état 2 vers l'état 3, càd. répartition instantanée des gaz comburés dans les deux cylindres au moment de la mise en communication des deux cylindres HP et PB, càd. ouverture de la soupape d'échappement du cylindre HP (soupape analogue à 9,11 aux Figures 4 et 9 à 15 en annexe) et éventuellement de la soupape d'admission correspondante du cylindre BP (soupape analogue à 23,24 aux Figures 4 et 9 à 11 en annexe), le piston du cylindre BP se trouvant à son PMH. Cette détente sera le mieux décrite par une détente isotherme, sans production d'un travail utile.

**3. Détente dans le cylindre BP** ou évolution de l'état 3 vers l'état 4, càd. détente qui aura lieu pendant que le piston du cylindre BP effectuera sa course descendante vers son PMB, la communication entre les cylindres HP et BP restant établie.

Le rapport ou taux de détente globale décisif détermine la quantité de travail mécanique pouvant être produite lors de la détente des gaz comburés dans un tel moteur à cinq temps suite à la chute de température de T1 vers T4. Ce taux est défini de la façon suivante (voir Figure 1):

```
Taux  de  détente  globale  =  taux  de  détente  dans  le
cylindre  HP  x  taux  de  détente  dans  le  cylindre  BP  =
(V2/V1)  x  (V4/V3)
```

où le "taux de détente dans le cylindre HP" est égal au volume intermédiaire du cylindre HP (V2) divisé par le volume mort (V1) de ce cylindre HP (à savoir le volume de la chambre de combustion), ledit volume intermédiaire étant égal au contenu du cylindre HP au moment de la mise en communication des cylindres HP et BP, et
où le "taux de détente dans le cylindre BP" est égal au maximum du volume total (V4) contenu à la fois dans le cylindre HP, dans le canal de transvasement et dans le cylindre BP, ce maximum étant atteint lors de la course descendante du piston du cylindre BP, divisé par le volume intermédiaire défini ci-dessus et en y ajoutant le volume du canal de transvasement des gaz comburés du cylindre HP vers le cylindre BP et le volume mort du cylindre BP (V3).

Dans le cas d'un moteur à combustion interne à cinq temps selon l'état de la technique, le mouvement des pistons des cylindres HP et BP, en opposition de phase, conduit à la situation suivante : le volume maximal de détente dans le cylindre BP (V4) est atteint quand le piston de ce cylindre BP se trouve à son PMB, le piston du cylindre HP se trouvant, par conséquent, à son PMH. Dans une telle situation, la cylindrée HP ne participe nullement à ce volume maximal décisif.

La présente invention a pour but de proposer un procédé qui permet d'améliorer le moteur à combustion interne, du type indiqué précédemment, en agissant sur le rapport de détente global décisif de manière à augmenter la quantité de travail mécanique produit lors de la détente des gaz comburés.

Pour atteindre ce but, le procédé selon l'invention est caractérisé en ce que l'on augmente le rapport global de détente, défini ci-dessus, en faisant intervenir une partie de la cylindrée des cylindres haute pression (cylindrée HP) dans le volume maximal de détente et ce, sans accroître ni la cylindrée dudit moteur, ni le rapport de compression des cylindres haute pression (HP), ni le volume mort du cylindre basse pression (BP), ni le volume du canal de transvasement des gaz comburés des cylindres HP vers le cylindre BP.

En outre, selon une autre de ses caractéristiques, la présente invention propose plusieurs modes de réalisation d'un moteur du genre indiqué précédemment, pour la mise en oeuvre du procédé de l'invention faisant intervenir une partie de la cylindrée des cylindres HP dans le volume maximal (V4) de la détente globale :

**A. Vilebrequin à 90° :**

Selon un premier mode de réalisation de l'invention, le moteur à combustion interne du genre indiqué précédemment est caractérisé en ce que les manivelles du vilebrequin, auxquelles sont reliées les bielles attachées aux pistons des cylindres haute pression (HP) alimentant alternativement un même cylindre basse pression (BP), sont parallèles entre elles et forment avec la manivelle, à laquelle est reliée la bielle attachée au piston dudit cylindre basse pression, un angle sensiblement plus petit que 180°, à savoir un angle de l'ordre de 90°, de façon à ce que le piston de ce cylindre basse pression atteigne son point mort haut (PMH) sensiblement avant que les pistons des cylindres haute pression adjacents n'atteignent leur point mort bas (PMB) respectif.

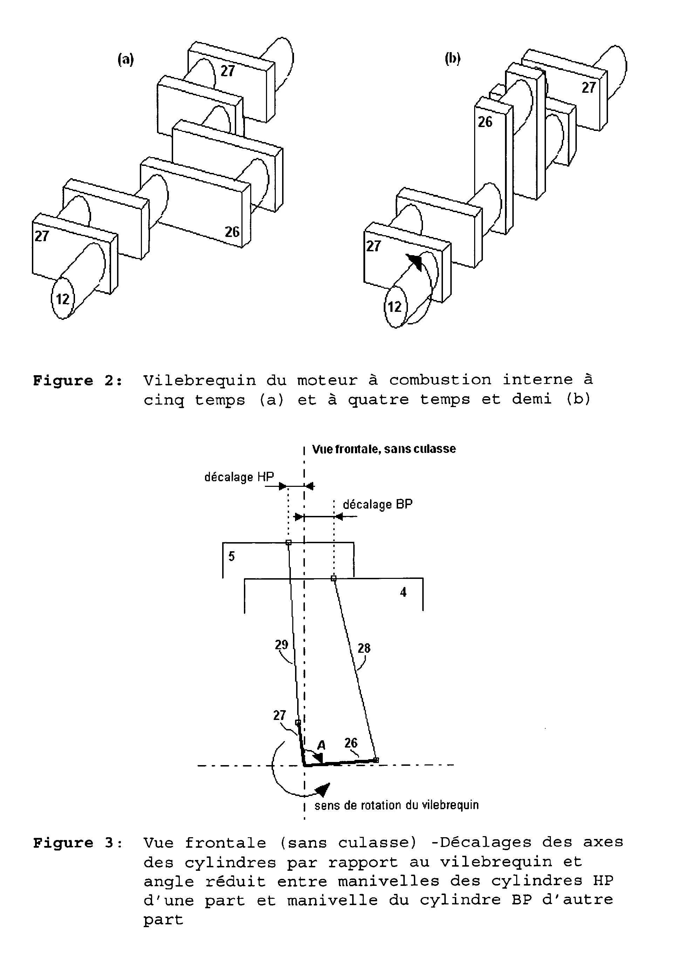

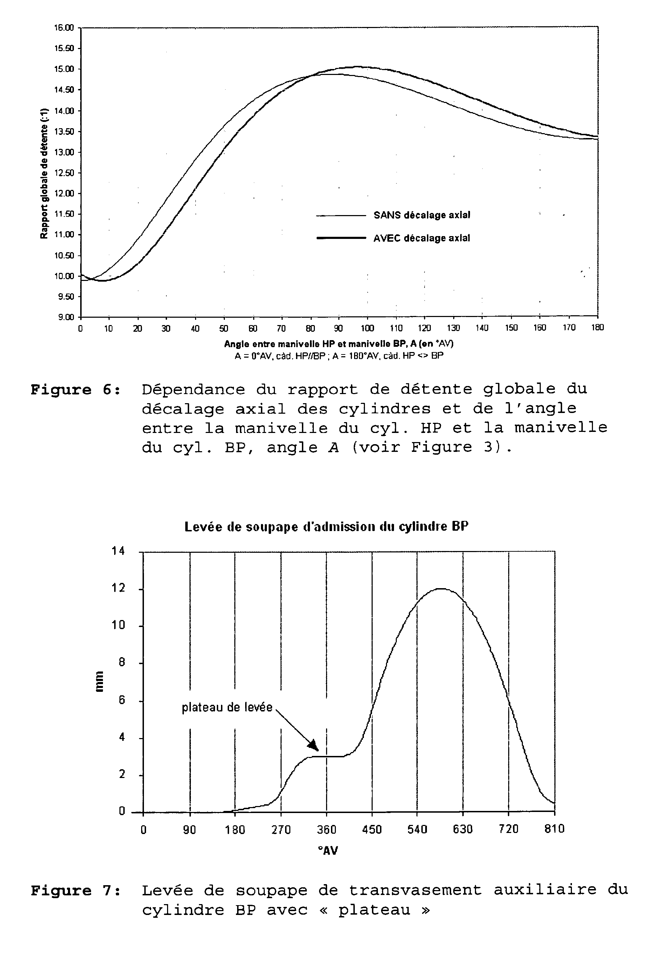

Dans cet arrangement, le volume maximal (V4) sera obtenu à l'instant, où la manivelle reliant le piston du cylindre BP au vilebrequin se trouve dans une position de l'ordre de 30°AV (angle du vilebrequin) avant sa position PMB (voir Figure 5). Ceci est du au fait que les vitesses des pistons des cylindres HP et BP ne sont pas uniformes en raison de la cinématique manivelle/bielle. Si pour des raisons mécaniques et thermodynamiques les autres paramètres géométriques sont fixés, c'est-à-dire les cylindrées des cylindres HP et BP, les taux de compression volumétrique des cylindres HP et BP, le volume du canal de transvasement, les rapports bielles/manivelles, le taux global de détente n'est plus fonction, dans ce cas, que de l'angle A, angle que forment les manivelles des cylindres HP (parallèles entre elles) avec la manivelle du cylindre BP reliée au piston du cylindre BP correspondant (voir Figure 3 et Figure 6). Dans le cas où ces autres paramètres géométriques prennent des valeurs courantes, voire techniquement possibles, à savoir un rapport de compression et/ou de détente volumétrique du cylindre BP de l'ordre de 32 et un volume du canal de transvasement égal à environ 6% de la cylindrée du cylindre BP, ce taux de détente globale du moteur est atteint si l'angle A est proche de 90°.

**B. Décalage des cylindres :**

Selon un autre mode de réalisation de l'invention, le moteur à combustion interne du genre indiqué précédemment est caractérisé en ce que d'une part, l'axe des cylindres haute pression (HP) est déplacé par rapport à l'axe du vilebrequin de façon à ce que la manivelle, à laquelle est attachée la bielle du cylindre haute pression, se trouve du même côté, par rapport à l'axe dudit vilebrequin, que l'axe dudit cylindre haute pression au moment où le piston de ce cylindre haute pression, se trouvant à mi-chemin entre son point mort haut et son point mort bas, est en train de descendre et d'autre part, l'axe du cylindre basse pression est déplacé par rapport à l'axe dudit vilebrequin de façon à ce que la manivelle, à laquelle est attachée la bielle du piston de ce cylindre basse pression, se trouve du même côté, par rapport à l'axe de ce vilebrequin, que l'axe du cylindre basse pression au moment où le piston de ce cylindre basse pression, se trouvant à mi-chemin entre son point mort bas et son point mort haut, est en train de monter.

En raison du fait que le volume maximal au cours de la deuxième détente est déjà atteint avant que le piston du cylindre BP n'atteigne son PMB, la durée disponible pour l'échappement peut être augmentée de cet intervalle de temps mis par le piston pour atteindre son PMB ou, d'une autre manière, l'ouverture de la ou des soupapes d'échappement du cylindre BP peut être ainsi avancée d'environ 30° AV. L'évacuation des gaz comburés résiduels de la chambre de combustion du cylindre HP peut être également améliorée grâce à cette avance de l'ouverture d'échappement du cylindre BP. En effet, le susdit volume maximal total est atteint quand le piston du cylindre HP se trouve à peine à mi-hauteur dans son cylindre, au moment où débutera l'échappement des gaz du cylindre BP. La communication entre cylindres HP et BP restant établie pendant la montée restante du piston du cylindre HP, ce temps peut être mis à profit pour une évacuation plus efficace des gaz comburés résiduels de la chambre de combustion du cylindre HP afin de réduire au maximum la portion de gaz comburés résiduels dans la charge fraîche à comburer lors du cycle suivant.

La deuxième détente du cycle initial à cinq temps démarre au moment où le piston du cylindre HP descendant se trouve à mi-chemin entre son PMH et son PMB. Par conséquent, la première détente, qui se déroule uniquement dans le cylindre HP, n'est accomplie qu'à moitié au moment où démarre la deuxième détente faisant intervenir les deux cylindres HP et BP. Pour cette raison, le moteur à combustion interne selon l'invention peut être qualifié de « moteur à combustion interne à quatre temps et demi ». Ce « rapprochement » des cycles, se déroulant dans les parties haute et basse pression, a en plus comme effet de réduire le temps total de séjour des gaz comburés sous pression à l'intérieur du moteur, càd. la durée s'écoulant entre allumage et ouverture de la soupape d'échappement. Ce temps de séjour est de l'ordre de 360°AV (angle du vilebrequin) dans le moteur à combustion interne à cinq temps et ne sera plus que de 270°AV dans le moteur selon la présente invention. Par conséquent, les pertes thermiques globales à travers les parois du bloc moteur vont être réduites. En effet le niveau global de température et de pression n'étant pas altéré par la modification en question, les pertes thermiques à travers les parois vont être réduites par le simple effet d'un temps de séjour réduit.

Les modes de réalisation d'un moteur à combustion interne décrits précédemment pour la mise en oeuvre du procédé de l'invention font intervenir soit un "vilebrequin à 90°" (paragraphe A. précédent) soit un "décalage des cylindres" (paragraphe B. précédent).

Toutefois, selon une variante supplémentaire, le moteur à combustion interne du genre indiqué précédemment, comporte à la fois "un vilebrequin à 90°" et "un décalage des cylindres" comme décrit aux paragraphes A. et B. en question.

En conséquence, selon un autre mode de réalisation de l'invention, le moteur à combustion interne du genre indiqué précédemment est caractérisé en ce que:

a) les manivelles du vilebrequin, auxquelles sont reliées les bielles attachées aux pistons des cylindres haute pression alimentant alternativement un même cylindre basse pression, sont parallèles entre elles et forment avec la manivelle, à laquelle est reliée la bielle attachée au piston dudit cylindre basse pression, un angle de l'ordre de 90° de façon à ce que le piston de ce cylindre basse pression atteigne son point mort haut sensiblement avant que les pistons des cylindres haute pression adjacents n'atteignent leur point mort bas respectif, et

b) d'une part l'axe des cylindres haute pression est déplacé par rapport à l'axe du vilebrequin de façon à ce que la manivelle, à laquelle est attachée la bielle du piston du cylindre haute pression, se trouve du même côté, par rapport à l'axe dudit vilebrequin, que l'axe de ce cylindre haute pression au moment où le piston de ce cylindre haute pression, se trouvant à mi-chemin entre son point mort haut et son point mort bas, est en train de descendre, et d'autre part l'axe du cylindre basse pression est déplacé par rapport à l'axe dudit vilebrequin de façon à ce que la manivelle, à laquelle est attachée la bielle du piston dudit cylindre basse pression, se trouve du même côté, par rapport à l'axe de ce vilebrequin, que l'axe de ce cylindre basse pression au moment où le piston de ce cylindre basse pression, se trouvant à mi-chemin entre son point mort bas et son point mort haut, est en train de monter.

En outre, selon une autre caractéristique de l'invention, le moteur à combustion interne du genre indiqué précédemment, comporte deux rangées de trois cylindres en ligne, ces rangées formant un angle entre elles de 180° et se trouvant de part et d'autre d'un vilebrequin unique à trois manivelles, les deux manivelles se trouvant aux extrémités de ce vilebrequin étant parallèles et reliées aux pistons des cylindres haute pression par les bielles correspondantes, la troisième manivelle se trouvant au milieu et étant reliée aux pistons des cylindres basse pression par les bielles correspondantes, cette dernière manivelle formant un angle d'environ 90° avec les deux autres manivelles, de sorte que les pistons des cylindres basse pression atteignent leur point mort haut respectif sensiblement avant que les pistons des cylindres haute pression adjacents n'atteignent leur point mort bas respectif.

Par ailleurs, selon une autre caractéristique de l'invention, le moteur à combustion interne du genre indiqué précédemment comporte des canaux de transvasement qui comprennent chacun une soupape principale de transvasement, ou soupape d'échappement du cylindre haute pression, et une soupape auxiliaire de transvasement laquelle fonctionne comme soupape d'admission du cylindre basse pression, la soupape principale de transvasement et cette soupape auxiliaire de transvasement du canal de transvasement qui aboutit au cylindre haute pression correspondant étant configurées de manière que ladite soupape auxiliaire s'ouvre sensiblement avant que le piston du cylindre basse pression n'atteigne son point mort haut, instant proche duquel va démarrer le transvasement des gaz comburés du cylindre haute pression correspondant à travers ledit canal de transvasement de sorte que ce canal de transvasement est mis sous pression par une partie des gaz comburés résiduels contenus dans le cylindre basse pression avant que ne s'ouvre la soupape principale de transvasement fonctionnant comme soupape d'échappement dudit cylindre haute pression correspondant et obturant ledit canal de transvasement du côté de ce cylindre haute pression et sans que ne s'accroisse de manière trop importante la profondeur de la pochette de soupape aménagée dans la surface supérieure du piston du cylindre basse pression pour éviter tout contact entre la soupape auxiliaire de transvasement et le piston du cylindre basse pression.

En outre, selon une caractéristique supplémentaire de l'invention, le cylindre basse pression du moteur à combustion interne comporte une ou plusieurs soupapes d'échappement commandées par un arbre à cames tournant à la vitesse du vilebrequin.

D'autre part, selon une autre caractéristique de l'invention, l'arbre à cames en question est doté de masses d'équilibrage disposées et dimensionnées de manière à réduire les vibrations du moteur engendrées par d'autres masses existantes et se déplaçant à la fréquence de rotation du vilebrequin.

L'invention sera mieux comprise et d'autres buts, caractéristiques et avantages de celle-ci apparaîtront plus clairement au cours de la description qui va suivre faite en référence aux dessins schématiques donnés uniquement à titre d'exemples illustrant des modes de réalisation de l'invention et dans lesquels:

la Figure 2a est une représentation schématique et en perspective du vilebrequin d'un moteur à combustion interne à cinq temps selon l'état de la technique,

- la Figure 2b est une représentation schématique et en perspective du vilebrequin d'un moteur à combustion interne à quatre temps et demi selon l'invention,
- la Figure 3 est une vue schématique frontale des axes des cylindres sans culasse par rapport au vilebrequin et de l'angle A entre les manivelles des cylindres HP d'une part et la manivelle du cylindre BP d'autre part,
- la Figure 4 est une vue schématique en plan de la culasse des cylindres HP et du cylindre BP, avec arrangement des soupapes et canaux de transvasement,
- la Figure 5 est une représentation graphique du diagramme d'évolution des volumes dans le cylindre BP et les cylindres HP pendant un tour de vilebrequin, l'angle A entre les manivelles des cylindres HP et la manivelle du cylindre BP étant égal à 90°,
- la Figure 6 est une représentation graphique du rapport de détente globale en fonction de l'angle A entre les manivelles des cylindres HP et la manivelle du cylindre BP,
- la Figure 7 est une représentation graphique de la levée de la soupape auxiliaire de transvasement du cylindre BP avec «plateau»,
- les Figures 8 à 15 sont respectivement des vues frontales et latérales du moteur selon l'invention avec vilebrequin à respectivement 5°, 95°, 185°, 275°, 365°, 455°, 545°, 635° après le PMH (admission dans le cylindre HP gauche),

- la Figure 16 est une légende graphique pour le description du fonctionnement du moteur à combustion interne aux Figures 17 à 20,
- les Figures 17 à 20 sont des représentations schématiques du fonctionnement d'un moteur à combustion interne à quatre temps et demi comprenant deux rangées de 3 cylindres opposés et dont le vilebrequin est positionné respectivement à 0° , 90°, 180° et 270°.

Dans ces figures, différents éléments du moteur selon l'invention sont représentés schématiquement lesquels sont référencés comme suit:

| | |
|---|---|
| 1 : | cylindre basse pression |
| 2 : | cylindre haute pression |
| 3 : | cylindre haute pression |
| 4 : | piston du cylindre basse pression |
| 5 : | piston du cylindre haute pression |
| 6 : | piston du cylindre haute pression |
| 7 : | soupape d'échappement du cylindre basse pression |
| 8 : | soupape d'admission du cylindre haute pression |
| 9 : | soupape principale de transvasement ou soupape d'échappement du cylindre haute pression |
| 10: | soupape d'admission du cylindre haute pression |
| 11: | soupape principale de transvasement ou soupape d'échappement du cylindre haute pression |
| 12: | vilebrequin |
| 13: | tubulure d'admission du cylindre haute pression |
| 14: | tubulure d'admission du cylindre haute pression |
| 16: | canal de transvasement |
| 17: | canal de transvasement |
| 19: | tubulure d'échappement du cylindre basse pression |
| 23: | soupape auxiliaire de transvasement ou soupape d'admission du cylindre basse pression |
| 24: | soupape auxiliaire de transvasement ou soupape d'admission du cylindre basse pression |
| 25: | poche de soupape |
| 26: | manivelle à laquelle est attaché le piston du cylindre basse pression |
| 27: | manivelle à laquelle est attaché le piston du cylindre haute pression |
| 28: | bielle du cylindre basse pression |
| 29: | bielle du cylindre haute pression |

Tel que représenté à la Figure 2(a), l'angle entre les manivelles 27 reliées aux pistons des cylindres HP et la manivelle 26 reliée au piston du cylindre BP est égal à 180° dans le moteur à cinq temps de l'état de la technique. Par contre, dans le moteur à quatre temps et demi de l'invention, cet angle, visible à la Figure 2(b) et représenté par l'angle A à la Figure 3, est fortement réduit à une valeur proche de 90°, de façon à ce que le « retard » du piston 4 du cylindre BP sur les pistons 5 des cylindres HP soit réduit.

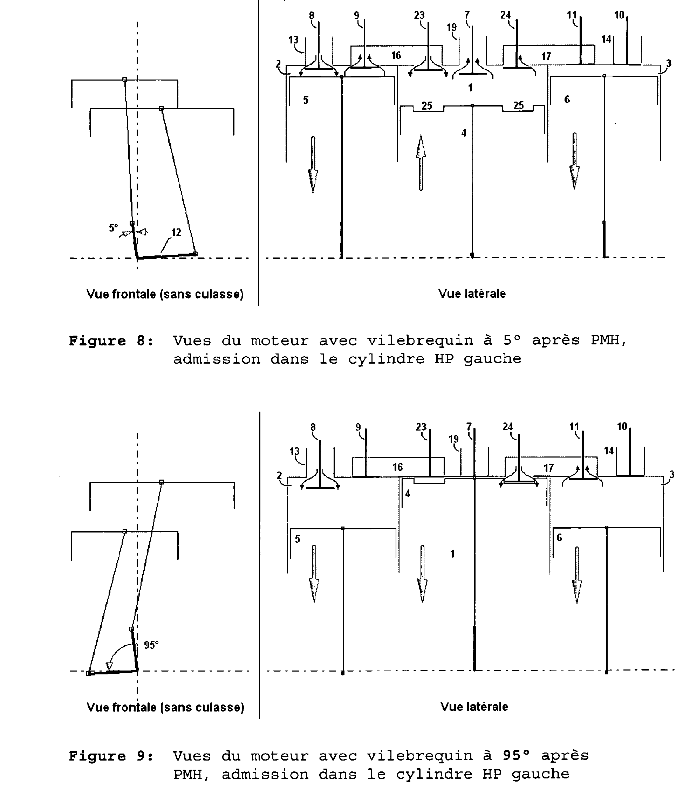

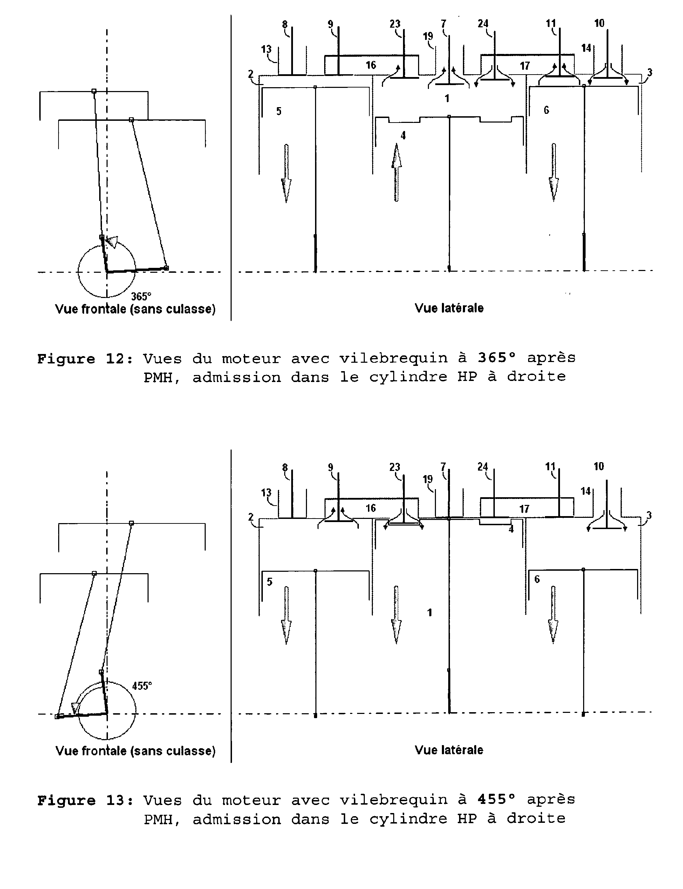

D'autre part, comme représenté à la Figure 4, le décalage des axes des cylindres HP 2,3 et le décalage de l'axe du cylindre BP 1 sont situés de part et d'autre de l'axe du vilebrequin 12. Ces décalages permettent d'optimiser l'arrangement des soupapes du cylindre BP dans le but de profiter au maximum de l'espace disponible en diminuant simultanément et le plus possible le volume des canaux de transvasement 16,17 et ce, en réduisant leurs longueurs au maximum (voir Figure 4). Chaque canal de transvasement 16,17 reliant un cylindre HP au cylindre BP peut être doté d'une soupape auxiliaire, celles-ci étant référencées respectivement 23 et 24 à la Figure 4, ce qui équivaut à munir le cylindre BP de deux soupapes d'admission pour les gaz comburés. La levée de cette dernière est caractérisée par l'apparition d' un « plateau » du côté ouverture de sorte que l'ouverture de la soupape en question peut être avancée par rapport au PMH du piston BP sans que les poches 25 de soupape, à la Figure 8, aménagées dans la face supérieure du piston 4 du cylindre BP pour pouvoir accueillir les soupapes, ne deviennent trop profondes (voir Figure 9, soupape 24 ainsi que Figure 13, soupape 23). Cette avance d'ouverture des soupapes en question sert à mettre le canal de transvasement en question sous pression juste avant que la connexion entre cylindres HP et BP à travers le canal en question ne soit réalisée. Ceci procure un avantage thermodynamique en évitant une augmentation défavorable d'entropie, qui elle serait la conséquence d'une chute de pression trop importante au moment de l'ouverture de la soupape d'échappement du cylindre HP.

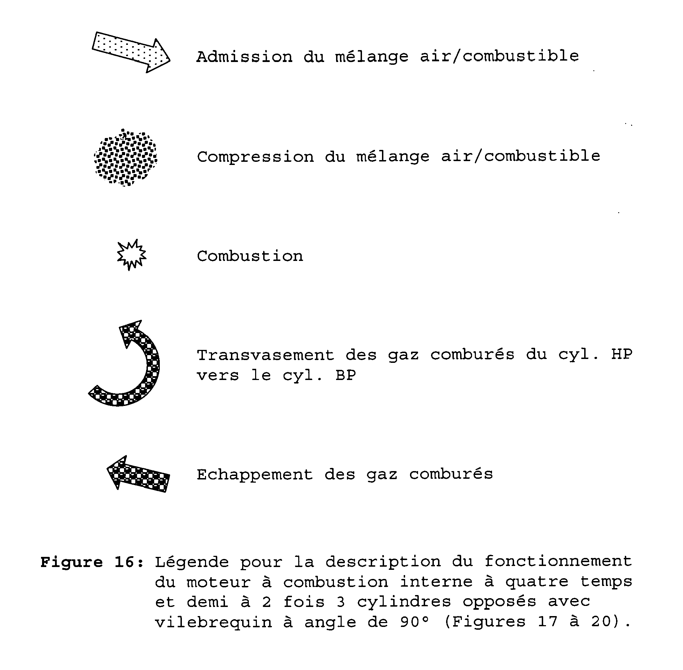

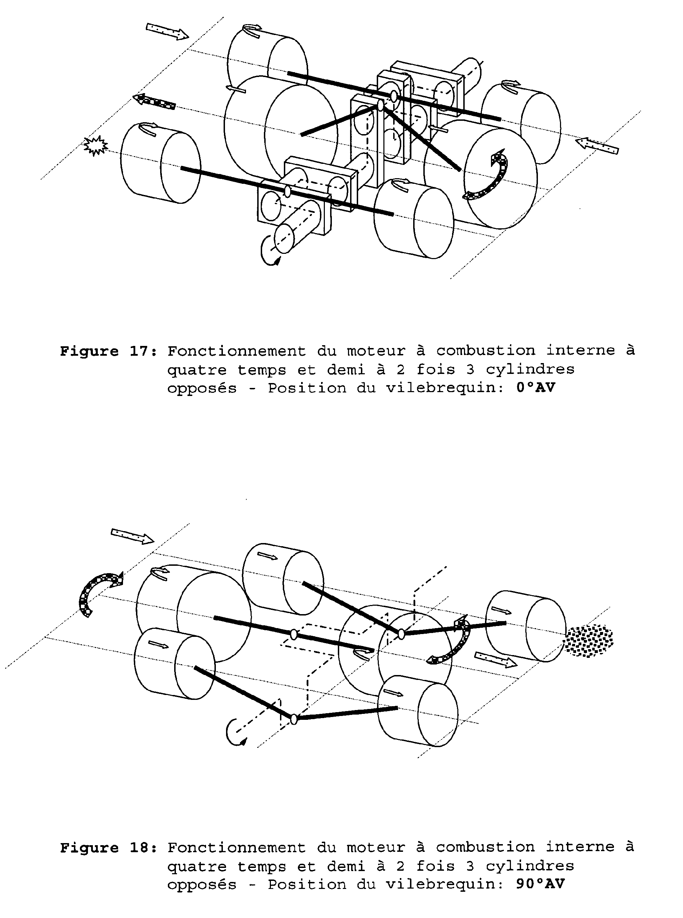

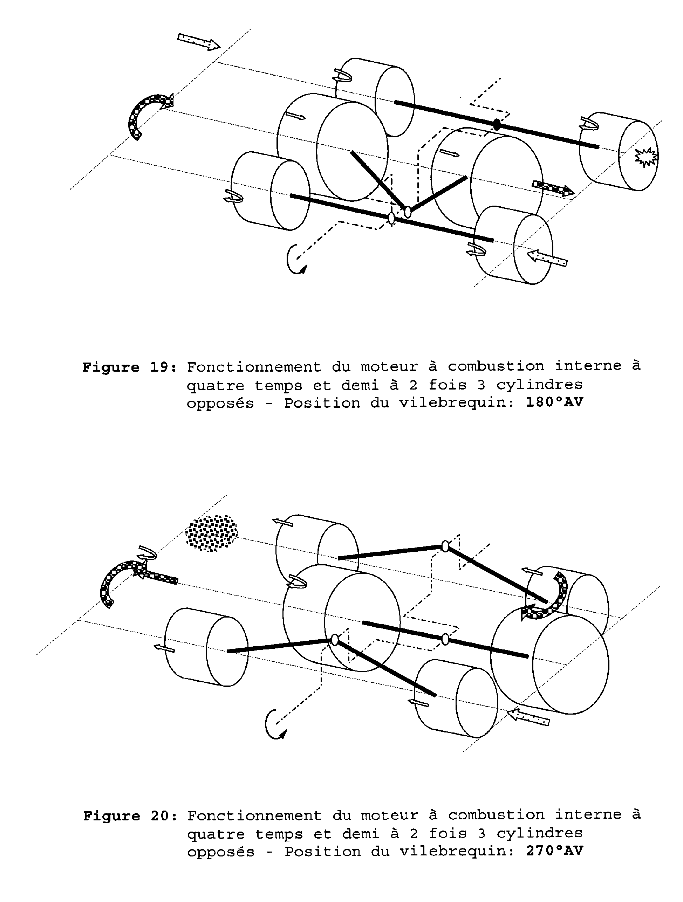

Un moteur, selon l'invention, à quatre temps et demi conçu sous la forme d'un moteur à deux fois 3 cylindres opposés avec un vilebrequin, dont l'angle entre les manivelles des cylindres HP et BP est de 90°, a l'avantage de réaliser une course à puissance tous les 90° d'angle du vilebrequin (Figures 16 à 20). Dans cette réalisation le vilebrequin est constitué de trois manivelles. Les deux manivelles se trouvant aux extrémités de ce vilebrequin sont reliées chacune aux pistons des deux cylindres HP qui se déplacent dans les cylindres correspondants arrangés de manière opposée. La manivelle centrale est reliée, quant à elle, aux pistons des deux cylindres BP qui, eux aussi, se déplacent dans deux cylindres BP arrangés de manière opposée. Dans une telle réalisation du moteur à quatre temps et demi, il sera difficile de profiter des avantages offerts par le décalage des axes des cylindres par rapport à l'axe du vilebrequin. En effet, s'il s'avère utile de profiter de ce décalage, il apparaîtra nécessaire de positionner les soupapes d'échappement des cylindres BP des deux côtés du bloc moteur (pour un cylindre BP « au-dessus » et pour l'autre cylindre BP « en-dessous » du bloc moteur). Ceci va conduire à un arrangement des tubulures d'échappement moins favorable d'un point de vue arrangement spatial.

Dans le cas où deux arbres à cames sont présents, dont un ne commande que les soupapes d'échappement du cylindre BP, celui-ci peut tourner à la vitesse du vilebrequin, puisque la(les) soupape(s) d'échappement du cylindre BP doit (doivent) s'ouvrir à chaque tour du vilebrequin, ce cylindre BP travaillant en fait suivant un cycle à deux temps, si on le considère d'une manière isolée. Cette modification n'apporte pas d'avantages au cycle thermodynamique, mais permet un profil de came avantageux au point de vue pression de contact entre came et appui (pression Hertz). Comme cet arbre tourne à la vitesse du vilebrequin, il est possible d'envisager d'en profiter afin d'y prévoir des masses pour équilibrer les forces mécaniques engendrées par les masses qui se déplacent à la fréquence de rotation du vilebrequin, càd. les pistons et les manivelles du vilebrequin lui-même.

**Description détaillée des cycles thermodynamiques dans le moteur selon l'invention à trois cylindres**

Les cycles thermodynamiques qui sont réalisés lors d'une mise en oeuvre du moteur selon l'invention dans le cas où celui-ci correspond à un moteur à trois cylindres et dont l'angle entre les manivelles des cylindres HP et la manivelle du cylindre BP du vilebrequin 12 est égal à 90°, sont décrits en détails ci-après en se référant aux Figures 8 à 15. Celles-ci montrent respectivement une vue frontale schématique (sans culasse) et une vue latérale schématique du moteur à quatre temps et demi à trois cylindres pour une position angulaire donnée du vilebrequin.

**Figure 8.** Les manivelles des cylindres HP se trouvent à un angle égal à 5° par rapport à la position verticale haute. Le piston 5 du cylindre HP 2, situé à gauche sur la figure, entame sa descente et est en train d'admettre un nouveau mélange air/combustible à travers la soupape d'admission 8 de ce cylindre HP 2, qui vient de s'ouvrir. La soupape d'échappement 9 du cylindre HP 2 est en train de se fermer et permet le balayage des gaz comburés résiduels vers le cylindre BP 1 à travers le canal de transvasement 16, à gauche, par l'arrivée du mélange frais. Le piston 4 du cylindre BP 1 central est en train de monter et chasse la grande partie des gaz comburés vers le système d'échappement à travers la soupape d'échappement 7 de ce cylindre BP, qui est ouverte. Une partie des gaz d'échappement est envoyée vers le canal de transvasement 17, à droite, à travers la soupape auxiliaire de transvasement 24, à droite, dont la levée est celle du « plateau » d'ouverture mentionnée ci-dessus (voir Figure 7). A l'intérieur du cylindre HP 3, à droite, vient se dérouler la combustion tandis que le piston correspondant 6 vient d'entamer sa descente. Les deux soupapes correspondantes 10, 11 sont fermées.

**Figure 9.** Les manivelles des cylindres HP se trouvent à un angle égal à 95° par rapport à la position verticale haute. Le piston 5 du cylindre HP 2, situé à gauche sur la figure, continue sa descente et est en train d'admettre un nouveau mélange air/combustible à travers la soupape d'admission 8 de ce cylindre HP 2, qui est ouverte tandis que la soupape d'échappement 9 du cylindre HP 2, à gauche, est fermée. Le piston 4 du cylindre BP 1 central vient de passer par son PMH, entame sa descente et commence à admettre les gaz comburés en provenance du cylindre HP 3, à droite, lesquels passent à travers la soupape d'échappement 11 de ce cylindre HP 3, à droite, le canal de transvasement 17, du côté droit, et la soupape auxiliaire de transvasement 24, à droite, les deux soupapes étant ouvertes. La soupape d'échappement 7 du cylindre BP 1 et la soupape auxiliaire de transvasement 23, à gauche, sont fermées. Le piston 6 du cylindre HP 3, à droite, continue sa descente et se trouve à mi-chemin entre ses PMH et PMB, en poursuivant la détente des gaz comburés et en produisant ainsi un travail utile.

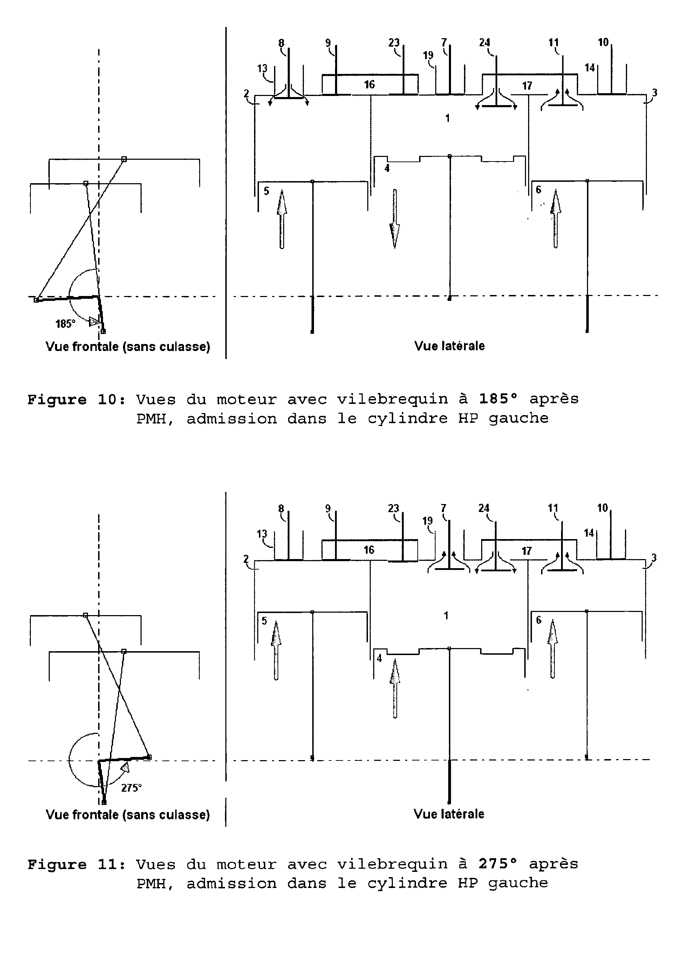

**Figure 10.** Les manivelles des cylindres HP se trouvent à un angle égal à 185° par rapport à la position verticale haute. Le piston 5 du cylindre HP 2, situé à gauche sur la figure, entame sa remontée et va comprimer le nouveau mélange air/combustible. La soupape d'admission 8 de ce cylindre HP 2, à gauche, va bientôt se fermer tandis que la soupape d'échappement 9 de ce même cylindre HP 2, à gauche, est fermée. Le piston 4 du cylindre BP 1 central poursuit sa descente et se trouve à mi-chemin entre ses PMH et PMB tout en continuant à admettre les gaz comburés en provenance du cylindre HP 3, à droite. Ces gaz comburés passent à travers la soupape d'échappement 11 du cylindre HP 3, à droite, le canal de transvasement 17, à droite, et la soupape auxiliaire de transvasement 24, à droite, les deux soupapes étant ouvertes tandis que le piston 6 de ce cylindre HP 3 détend simultanément ces gaz comburés, produisant ainsi un travail utile. La soupape d'échappement 7 du cylindre BP et la soupape auxiliaire de transvasement 23 à gauche sont fermées. Le piston 6 du cylindre HP à droite entame sa remontée pour chasser les gaz comburés à travers le canal de transvasement 17 vers le cylindre BP central tandis que le piston 4 du cylindre BP poursuit sa descente en direction de son PMB. A partir de ce moment, ce n'est plus que le piston du cylindre BP 1 qui produit un travail utile, le piston 6 du cylindre HP 3, à droite, consommant du travail pendant sa remontée.

**Figure 11.** Les manivelles des cylindres HP 2 et 3 se trouvent à un angle égal à 275° par rapport à la position verticale haute. Le piston 5 du cylindre HP 2, situé à gauche sur la figure, continue sa remontée et comprime le nouveau mélange air/combustible. Toutes les soupapes 8,9 du cylindre HP 2, à gauche, sont fermées. Le piston 4 du cylindre BP 1 central se trouve proche de son PMB et entame sa remontée. La soupape d'échappement 7 du cylindre BP en question vient de s'ouvrir afin d'évacuer, en direction du système d'échappement, les gaz comburés contenus dans ce même cylindre BP. Le piston 6 du cylindre HP 3, à droite, poursuit sa remontée et continue à chasser, vers le cylindre BP 1, les gaz comburés contenus dans ce cylindre HP 3 et ce, à travers la soupape d'échappement 11, à droite, le canal de transvasement 17, à droite, et la soupape auxiliaire de transvasement 24, les deux soupapes étant ouvertes.

**Figure 12, Figure 13, Figure 14 et Figure 15.** Un nouveau cycle démarre avec l'admission d'un nouveau mélange air/combustible dans le cylindre HP 3, situé à droite sur ces figures, et les différentes phases correspondent à celles décrites dans les Figure 8, Figure 9, Figure 10 et Figure 11 en inversant les côtés gauche et droit.

## Revendications

1.    Procédé pour améliorer un moteur à combustion interne du genre comprenant au moins un cylindre qui comprend une chambre de travail de volume variable par le déplacement dans ce cylindre d'un piston entre une position de point mort haut et une position de point mort bas, à chaque tel cylindre étant associés des moyens d'admission et d'évacuation d'un fluide gazeux, le piston de chaque tel cylindre étant relié à un arbre vilebrequin dudit moteur, ce moteur utilisant:

   a) d'une part au moins un tel cylindre (1) fonctionnant en cylindre basse pression suivant un mode du type deux temps, qui comprennent l'admission accompagnée de la détente produisant un travail utile au cours de chaque course du piston de ce cylindre basse pression (1) vers son point mort bas et l'échappement d'un fluide gazeux au cours de chaque course du piston (4) vers son point mort haut, et

   b) d'autre part, deux tels cylindres (2, 3) fonctionnant en cylindres comburants haute pression suivant un mode du type quatre temps, qui comprennent l'admission de l'air ou d'un mélange air-combustible au cours de la première course du piston de chacun desdits cylindres comburants (2, 3) vers son point mort bas, la compression de l'air ou d'un mélange air-combustible au cours de la première course du piston vers son point mort haut, suivie de la combustion, la détente des gaz comburés au cours de la deuxième course du piston vers son point mort bas produisant un travail utile et le refoulement des gaz comburés au cours de la deuxième course du piston vers son point mort haut, la cylindrée de chacun des cylindres comburants (2, 3) étant inférieure à celle du cylindre basse pression (1), les cylindres comburants (2, 3) refoulant alternativement leurs gaz comburés vers le cylindre basse pression (1) en vue d'une deuxième détente des gaz comburés, **caractérisé en ce que** l'on augmente le rapport global de détente en faisant intervenir une partie de la cylindrée des cylindres haute pression dans le volume maximal de détente et ce, sans accroître ni la cylindrée dudit moteur, ni le rapport de compression des cylindres haute pression, ni le volume mort du cylindre basse pression, ni le volume du canal de transvasement des gaz comburés des cylindres haute pression vers le cylindre basse pression.

2.    Moteur à combustion interne pour la mise en oeuvre du procédé selon la revendication 1, du type comprenant au moins un cylindre qui comprend une chambre de travail de volume variable par le déplacement dans ce cylindre d'un piston entre une position de point mort haut et une position de point mort bas, à chaque tel cylindre étant associés des moyens d'admission et d'évacuation d'un fluide gazeux, le piston de chaque tel cylindre étant relié à un arbre vilebrequin dudit moteur, ce moteur utilisant:

   a) d'une part au moins un tel cylindre (1) fonctionnant en cylindre basse pression suivant un mode du type deux temps, qui comprennent l'admission accompagnée de la détente produisant un travail utile au cours de chaque course du piston de ce cylindre basse pression (1) vers son point mort bas et l'échappement d'un fluide gazeux au cours de chaque course du piston (4) vers son point mort haut, et

   b) d'autre part, deux tels cylindres (2, 3) fonctionnant en cylindres comburants haute pression suivant un mode du type quatre temps, qui comprennent l'admission de l'air ou d'un mélange air-combustible au cours de la première course du piston de chacun desdits cylindres comburants (2, 3) vers son point mort bas, la compression de l'air ou d'un mélange air-combustible au cours de la première course du piston vers son point mort haut, suivie de la combustion, la détente des gaz comburés au cours de la deuxième course du piston vers son point mort bas produisant un travail utile et le refoulement des gaz comburés au cours de la deuxième course du piston vers son point mort haut, la cylindrée de chacun des cylindres comburants (2, 3) étant inférieure à celle du cylindre basse pression (1), les cylindres comburants (2, 3) refoulant alternativement leurs gaz comburés vers le cylindre basse pression (1) en vue d'une deuxième détente des gaz comburés, **caractérisé en ce que** les manivelles (27) du vilebrequin, auxquelles sont reliées les bielles (29) attachées aux pistons (5 ; 6) des cylindres haute pression alimentant alternativement un même cylindre basse pression, sont parallèles entre elles et forment avec la manivelle (26), à laquelle est reliée la bielle (28) attachée au piston dudit cylindre basse pression (1), un angle de l'ordre de 90° de façon à ce que le piston (4) de ce cylindre basse pression atteigne son point mort haut sensiblement avant que les pistons (5 ; 6) des cylindres haute pression adjacents n'atteignent leur point mort bas respectif.

3. Moteur à combustion interne pour la mise en oeuvre du procédé selon la revendication 1, du type comprenant au moins un cylindre qui comprend une chambre de travail de volume variable par le déplacement dans ce cylindre d'un piston entre une position de point mort haut et une position de point mort bas, à chaque tel cylindre étant associés des moyens d'admission et d'évacuation d'un fluide gazeux, le piston de chaque tel cylindre étant relié à un arbre vilebrequin dudit moteur, ce moteur utilisant:

a) d'une part au moins un tel cylindre (1) fonctionnant en cylindre basse pression suivant un mode du type deux temps, qui comprennent l'admission accompagnée de la détente produisant un travail utile au cours de chaque course du piston de ce cylindre basse pression (1) vers son point mort bas et l'échappement d'un fluide gazeux au cours de chaque course du piston (4) vers son point mort haut, et

b) d'autre part, deux tels cylindres (2, 3) fonctionnant en cylindres comburants haute pression suivant un mode du type quatre temps, qui comprennent l'admission de l'air ou d'un mélange air-combustible au cours de la première course du piston de chacun desdits cylindres comburants (2, 3) vers son point mort bas, la compression de l'air ou d'un mélange air-combustible au cours de la première course du piston vers son point mort haut, suivie de la combustion, la détente des gaz comburés au cours de la deuxième course du piston vers son point mort bas produisant un travail utile et le refoulement des gaz comburés au cours de la deuxième course du piston vers son point mort haut, la cylindrée de chacun des cylindres comburants (2, 3) étant inférieure à celle du cylindre basse pression (1), les cylindres comburants (2, 3) refoulant alternativement leurs gaz comburés vers le cylindre basse pression (1) en vue d'une deuxième détente des gaz comburés, **caractérisé en ce que** d'une part l'axe des cylindres haute pression (2 ; 3) est déplacé par rapport à l'axe du vilebrequin (12) de façon à ce que la manivelle (27), à laquelle est attachée la bielle (29) du piston (5 ; 6) du cylindre haute pression, se trouve du même côté, par rapport à l'axe dudit vilebrequin (12), que l'axe de ce cylindre haute pression (2 ; 3) au moment où le piston (5 ; 6) de ce cylindre haute pression, se trouvant à mi-chemin entre son point mort haut et son point mort bas, est en train de descendre **et en ce que** d'autre part l'axe du cylindre basse pression (1) est déplacé par rapport à l'axe dudit vilebrequin (12) de façon à ce que la manivelle (26), à laquelle est attachée la bielle (28) du piston (4) dudit cylindre basse pression (1), se trouve du même côté, par rapport à l'axe de ce vilebrequin (12), que l'axe de ce cylindre basse pression (1) au moment où le piston (4) de ce cylindre basse pression, se trouvant à mi-chemin entre son point mort bas et son point mort haut, est en train de monter.

4. Moteur à combustion interne pour la mise en oeuvre du procédé selon la revendication 1, du type comprenant au moins un cylindre qui comprend une chambre de travail de volume variable par le déplacement dans ce cylindre d'un piston entre une position de point mort haut et une position de point mort bas, à chaque tel cylindre étant associés des moyens d'admission et d'évacuation d'un fluide gazeux, le piston de chaque tel cylindre étant relié à un arbre vilebrequin dudit moteur, ce moteur utilisant:

a) d'une part au moins un tel cylindre (1) fonctionnant en cylindre basse pression suivant un mode du type deux temps, qui comprennent l'admission accompagnée de la détente produisant un travail utile au cours de chaque course du piston de ce cylindre basse pression (1) vers son point mort bas et l'échappement d'un fluide gazeux au cours de chaque course du piston (4) vers son point mort haut, et

b) d'autre part, deux tels cylindres (2, 3) fonctionnant en cylindres comburants haute pression suivant un mode du type quatre temps, qui comprennent l'admission de l'air ou d'un mélange air-combustible au cours de la première course du piston de chacun desdits cylindres comburants (2, 3) vers son point mort bas, la compression de l'air ou d'un mélange air-combustible au cours de la première course du piston vers son point mort haut, suivie de la combustion, la détente des gaz comburés au cours de la deuxième course du piston vers son point mort bas produisant un travail utile et le refoulement des gaz comburés au cours de la deuxième course du piston vers son point mort haut, la cylindrée de chacun des cylindres comburants (2, 3) étant inférieure à celle du cylindre basse pression (1), les cylindres comburants (2, 3) refoulant alternativement leurs gaz comburés vers le cylindre basse pression (1) en vue d'une deuxième détente des gaz comburés, **caractérisé en ce que**: a) les manivelles (27) du vilebrequin, auxquelles sont reliées les bielles (29) attachées aux pistons (5 ; 6) des cylindres haute pression alimentant alternativement un même cylindre basse pression, sont parallèles entre elles et forment avec la manivelle (26), à laquelle est reliée la bielle (28) attachée au piston dudit cylindre basse pression (1), un angle de l'ordre de 90° de façon à ce que le piston (4) de ce cylindre basse pression atteigne son point mort haut sensiblement avant que les pistons (5 ; 6) des cylindres haute pression adjacents n'atteignent leur point mort bas respectif,

b) d'une part l'axe des cylindres haute pression (2 ; 3) est déplacé par rapport à l'axe du vilebrequin (12) de façon à ce que la manivelle (27), à laquelle est attachée la bielle (29) du piston (5 ; 6) du cylindre haute pression, se trouve du même côté, par rapport à l'axe dudit vilebrequin (12), que l'axe de ce cylindre haute pression (2 ; 3) au moment où le piston (5 ; 6) de ce cylindre haute pression, se trouvant à mi-chemin entre son point mort haut et son point mort bas, est en train de descendre et d'autre part l'axe du cylindre basse pression (1) est déplacé par rapport à l'axe dudit vilebrequin (12) de façon à ce que la manivelle (26), à laquelle est attachée la bielle (28) du piston (4) dudit cylindre basse pression (1), se trouve du même côté, par rapport à l'axe de ce vilebrequin (12), que l'axe de ce cylindre basse pression (1) au moment où le piston (4) de ce cylindre basse pression, se trouvant à mi-chemin entre son point mort bas et son point mort haut, est en train de monter.

5. Moteur à combustion interne selon l'une des revendications 2 à 4, **caractérisé que ce qu**'il comporte deux rangées de trois cylindres en ligne, ces rangées formant un angle entre elles de 180° et se trouvant de part et d'autre d'un même vilebrequin unique à trois manivelles (26 ; 27), les deux manivelles se trouvant aux extrémités de ce vilebrequin (27) étant parallèles et reliées aux pistons (5 ; 6) des cylindres haute pression par les bielles correspondantes (27), la troisième manivelle (26) se trouvant au milieu et étant reliée aux pistons (4) des cylindres basse pression par les bielles (29) correspondantes, cette dernière manivelle (26) formant un angle d'environ 90° avec les deux -autres manivelles (27), de sorte que les pistons (4) des cylindres basse pression atteignent leur point mort haut respectif sensiblement avant que les pistons (5 ; 6) des cylindres haute pression adjacents (2 ; 3) n'atteignent leur point mort bas respectif.

6. Moteur à combustion interne selon l'une des revendications 2 à 5, **caractérisé en ce qu'**il comporte des canaux de transvasement qui comprennent chacun une soupape principale de transvasement (9; 11) et une soupape auxiliaire de transvasement (23 ; 24) laquelle fonctionne comme soupape d'admission du cylindre basse pression, la soupape principale de transvasement (9 ; 11) et cette soupape auxiliaire de transvasement (23 ; 24) du canal de transvasement (16 ; 17) qui aboutit au cylindre haute pression correspondant (2 ; 3) étant configurées de manière que ladite soupape auxiliaire (23 ; 24) s'ouvre sensiblement avant que le piston (4) du cylindre basse pression n'atteigne son point mort haut, instant proche duquel va démarrer le transvasement des gaz comburés du cylindre haute pression correspondant (2 ; 3) à travers ledit canal de transvasement (16 ; 17) de sorte que ce canal de transvasement (16 ; 17) est mis sous pression par une partie des gaz comburés résiduels contenus dans le cylindre basse pression (1) avant que ne s'ouvre la soupape principale de transvasement (9 ; 11) fonctionnant comme soupape d'échappement dudit cylindre haute pression correspondant (2 ; 3) et obturant ledit canal de transvasement (16 ; 17) du côté de ce cylindre haute pression (2 ; 3) et sans que ne s'accroisse de manière trop importante la profondeur (25) de la pochette de soupape aménagée dans la surface supérieure du piston (4) du cylindre basse pression pour éviter tout contact entre la soupape auxiliaire de transvasement (23 ; 24) et le piston (4) du cylindre basse pression.

7. Moteur à combustion interne selon l'une des revendications 2 à 6, **caractérisé en ce que** le cylindre basse pression (1) comporte une ou plusieurs soupapes d'échappement (7) commandées par un arbre à cames tournant à la vitesse du vilebrequin.

8. Moteur à combustion interne selon la revendication 7, **caractérisé en ce que** l'arbre à cames commandant les soupapes du cylindre basse pression et tournant à la vitesse du vilebrequin est doté de masses d'équilibrage disposées et dimensionnées de manière à réduire les vibrations du moteur engendrées par d'autres masses existantes et se déplaçant à la fréquence de rotation du vilebrequin.

Figure 1:   Evolution thermodynamique de la détente globale
            dans un moteur à combustion interne à cinq
            temps (état de la technique)

(a)         (b)

**Figure 2:** Vilebrequin du moteur à combustion interne à cinq temps (a) et à quatre temps et demi (b)

Vue frontale, sans culasse

décalage HP

décalage BP

5

4

29    28

27

A   26

sens de rotation du vilebrequin

**Figure 3:** Vue frontale (sans culasse) -Décalages des axes des cylindres par rapport au vilebrequin et angle réduit entre manivelles des cylindres HP d'une part et manivelle du cylindre BP d'autre part

## Vue du dessus

**Figure 4:** Vue du dessus de la culasse, avec arrangement des soupapes et canaux de transvasement

**Figure 5:** Evolution des volumes dans les cylindres BP et HP pendant un tour de vilebrequin, l'angle *A* étant égal à 90°.

**Figure 6:** Dépendance du rapport de détente globale du décalage axial des cylindres et de l'angle entre la manivelle du cyl. HP et la manivelle du cyl. BP, angle *A* (voir Figure 3).

**Figure 7:** Levée de soupape de transvasement auxiliaire du cylindre BP avec « plateau »

Vue frontale (sans culasse)          Vue latérale

**Figure 8:** Vues du moteur avec vilebrequin à 5° après PMH, admission dans le cylindre HP gauche

Vue frontale (sans culasse)          Vue latérale

**Figure 9:** Vues du moteur avec vilebrequin à 95° après PMH, admission dans le cylindre HP gauche

Vue frontale (sans culasse)     Vue latérale

**Figure 10:** Vues du moteur avec vilebrequin à **185°** après PMH, admission dans le cylindre HP gauche

Vue frontale (sans culasse)     Vue latérale

**Figure 11:** Vues du moteur avec vilebrequin à **275°** après PMH, admission dans le cylindre HP gauche

**Figure 12:** Vues du moteur avec vilebrequin à **365°** après PMH, admission dans le cylindre HP à droite

**Figure 13:** Vues du moteur avec vilebrequin à **455°** après PMH, admission dans le cylindre HP à droite

**Figure 14:** Vues du moteur avec vilebrequin à **545°** après PMH, admission dans le cylindre HP à droite

**Figure 15:** Vues du moteur avec vilebrequin à **635°** après PMH, admission dans le cylindre HP à droite

Admission du mélange air/combustible

Compression du mélange air/combustible

Combustion

Transvasement des gaz comburés du cyl. HP
vers le cyl. BP

Echappement des gaz comburés

**Figure 16:** Légende pour la description du fonctionnement
du moteur à combustion interne à quatre temps
et demi à 2 fois 3 cylindres opposés avec
vilebrequin à angle de 90° (Figures 17 à 20).

**Figure 17:** Fonctionnement du moteur à combustion interne à quatre temps et demi à 2 fois 3 cylindres opposés - Position du vilebrequin: **0°AV**

**Figure 18:** Fonctionnement du moteur à combustion interne à quatre temps et demi à 2 fois 3 cylindres opposés - Position du vilebrequin: **90°AV**

**Figure 19:** Fonctionnement du moteur à combustion interne à quatre temps et demi à 2 fois 3 cylindres opposés - Position du vilebrequin: **180°AV**

**Figure 20:** Fonctionnement du moteur à combustion interne à quatre temps et demi à 2 fois 3 cylindres opposés - Position du vilebrequin: **270°AV**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1201892 A, Gerhard Schmitz

- US 6553977 B, Gerhard Schmitz